# EUROPEAN PATENT APPLICATION

(11) **EP 2 551 754 A2**
(43) Date of publication of application: **30.01.2013**
(21) Application number: 12176144.9
(22) Date of filing: 12.07.2012
(51) Int. Cl.: G06F 3/041

(54) **Protective sheet for touch panel and fabrication method thereof**

(30) Priority: 27.07.2011 KR 20110074572
(71) Applicant: HJ Corp, Gyeonggi-do 445-922 (KR)
(72) Inventor: Yoon, Se Won, Gyeonggi-do 441-704 (KR)
(74) Representative: Twelmeier Mommer & Partner

(57) **Abstract**

A protective sheet for a touch panel and a fabrication method thereof are provided. The protective sheet for a touch panel in accordance with the present invention includes first to nth (where n is a natural number) base films formed of optical, highly transparent films, first to nth primer layers formed by applying a synthetic resin having bonding characteristics to one surface of each of the first to nth base films, first to nth protective layers made of a synthetic resin including a hardening agent and formed on a surface of each of the first to nth primer layers to protect the first to nth base films, and a first to nth unit protective units including first to nth adhesive layers formed on the outer surface of each of the first to nth base films, wherein adhesive strength of the first to nth adhesive layers are sequentially reduced such that the first adhesive layer has the highest adhesive strength and the nth adhesive layer has the lowest adhesive strength. Thus, even if an exposed protective layer in use is contaminated or scratched, only the corresponding unit protective sheet can be exfoliated to be removed without having to replace the protective sheet, the protective sheet can be used several times, and thus, it is economical.

## Description

### Field of the Invention

The present invention relates to a protective sheet for a touch panel and a fabrication method thereof, and more particularly, to a protective sheet for a touch panel formed by laminating a plurality of unit protective units and a fabrication method thereof.

### Background of the Invention

In general, a touch screen refers to a screen configured as a flat panel display such as a liquid crystal display (LCD) to directly output data when a user's hand or an object comes into contact with a character displayed thereon or a particular position thereof without using a keyboard. That is, when a user's hand or an object comes into contact with the screen, a corresponding position is recognized and specifically processed by stored software to display output data on the screen.

Such a touch screen is covered by a protective sheet to prevent a generation of scratches, static electricity, and contamination. The protective sheet may be used to protect the screen of an electronic/information communication device such as a mobile communication terminal, a portable multimedia player (PMP), MPEG audio layer-3 (MP3), a thin film TV, and the like.

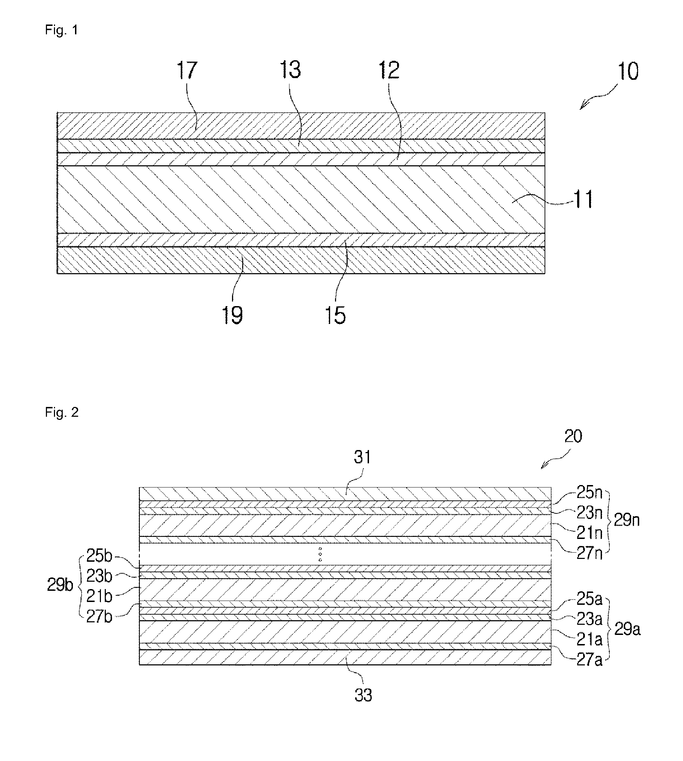

Fig. 1 is a cross-sectional view showing a protective sheet for a touch panel according to the related art.

In the protective sheet 10 for a touch panel according to the related art, a protective layer 13 and an adhesive layer 15 are formed on upper and lower surfaces of a base film 11, respectively, and the protective layer 13 and the adhesive layer 15 are covered by first and second protective films 17 and 19, respectively. Also, a primer layer 12 is formed between the base film 11 and the protective layer 13.

In the above, the base film 11 is made of a transparent synthetic resin having excellent scratch-resistance and formed to have a thickness ranging from 50µm to 200µm.

The primer layer 12 is formed by applying a synthetic resin having excellent bonding characteristics with the base film 11 to an upper surface of the base film 11 to have a thickness ranging from 0.1**µm** to 50**µm** and serves to enhance bonding characteristics of the protective layer 13 to be formed later.

The protective layer 13 serves to prevent the base film 11 from being damaged, and is formed by applying an acrylic resin containing a hardening agent to the primer layer 12 by a thickness ranging from 10**µm** to 30**µm** and performing UV curing.

The adhesive layer 15 is made of a synthetic resin having adhesion characteristics and formed to have a thickness ranging from 10**µm** to 30**µm**. The other surface of the adhesive layer 15 opposed to one surface thereof in contact with the base film 11 is bonded to a screen (not shown) of an electronic/information communication device including a touch panel (not shown).

The first protective film 17 covers the protective layer 13 to protect the protective layer 13, preventing the protective sheet 10 from being scratched or contaminated in case of packaging and distribution.

The second protective film 19 is not in contact with the base film 11 of the adhesive layer 15 and protects a surface bonded with the surface of the electronic/information communication device including a touch panel.

In the above, the first and second protective films 17 and 19 are removed when the protective sheet 10 is bonded to the screen of the electronic/information communication device including a touch panel.

However, the protective sheet for a touch panel having the foregoing configuration according to the related art should be replaced by a new one when the protective layer is contaminated or scratched.

Thus, a protective sheet for a touch panel including a plurality of protective layers so that when a protective layer thereof is contaminated or scratched, it is exfoliated to be removed and a lower protective layer can be used has been developed.

A protective sheet according to another related art is disclosed in Korean Patent Laid Open Publication No. 2001-103624 (Entitled: Graffiti and/or Environmental Protective Article having Removable Sheets, Supports Protected Therewith, and Method of Use).

Another related art protective sheet includes a film (a) having a first side having a surface area and a second side having a surface area and opposed to the first side, a bonding layer (b) having a first side having a surface area and a second side having a surface area and opposed to the first side (here, the bonding layer is coupled to the second side of the film through the first side thereof such that at least the center of the surface area of the second side of the film is in contact with the bonding layer, and the bonding layer is bonded to about 50% or more of the surface area of the second side of the film), and an optional release layer (c) coated on the first side of the film, wherein, except for a bottom sheet of a sheet stack including the respective sheets, when a bonding layer of a sheet has an underlying sheet , it is laminated on another sheet so as to be in contact with a release layer and a protective film, the uppermost sheet pulsed out from the sheet stack so as to be removed from the sheet stack such that the sheet removed from the stack and the other sheets remaining in the stack are not delaminated, and when an eye test is performed by using a 3-meter Snellen eye test chart, the sheet stack allows a viewer having a 6 meter/6 meter vision to read a line on the eye test chart indicating a value greater than about 6 meter/12 meter vision.

In the above, the protective sheet serves to prevent a certain sheet under the exposed uppermost sheet, as well as a support to be protected such as a glass window, from being damaged, and when the protective sheet includes about three sheets or more, and generally, about five to ten sheets, it is formed as a continuous phase piece. Thus, when the exposed uppermost sheet of the protective sheet is damaged by a general scratch tool such as a razor, a knife, a cloth pad, or a pointy diamond and carbide steel pen, the damaged uppermost sheet is removed to expose an underlying undamaged sheet. That is, the uppermost damaged sheet is removed such that a release layer of the underlying sheet whose bonding layer is not damaged is separated and exposed. In this case, the uppermost sheet may be pulled out from the sheet stack, while holding it with an adhesive bar, so as to be removed.

Further, the respective sheets including the uppermost sheet may further include a tap used to remove a sheet or holes formed in a deviated manner such that they do not overlap. In this case, when the respective sheets including the uppermost sheet includes a tap, the uppermost sheet is removed by pulling out the tap included in the uppermost sheet. In addition, when the respective sheets including the uppermost sheet further include holes formed in a deviated manner such that they do not overlap, a tool such as a gimlet or the like is inserted into the hole included in the uppermost layer to pull out the uppermost sheet to remove it.

However, the protective sheet according to another related art having the foregoing configuration has a problem in that, because adhesive strength of the bonding layers of the respective sheets is equal, when the uppermost damaged sheet is removed, the underlying sheets are also removed together. Further, since the tap or the holes formed in a deviated manner not to overlap, which is used to remove the respective sheets, should be formed, aesthetic appearance is spoiled and the processes are increased.

### Summary of the Invention

It is, therefore, an object of the present invention to provide a protective sheet for a touch panel and a fabrication method thereof capable of selectively exfoliating and removing the uppermost damaged protective unit among a plurality of protective units such that an underlying protective unit does not come off.

Another object of the present invention is to provide a protective sheet for a touch panel and a fabrication method thereof capable of preventing an aesthetic appearance from being spoiled by omitting a formation of a tap or a hole, and reducing the number of processes.

In accordance with one aspect of the present invention, there is provided a protective sheet for a touch panel, the protective sheet including: first to nth (where n is a natural number) base films formed of optical, highly transparent films; first to nth primer layers formed by applying a synthetic resin having bonding characteristics to one surface of each of the first to nth base films; first to nth protective layers made of a synthetic resin including a hardening agent and formed on a surface of each of the first to nth primer layers to protect the first to nth base films; and a first to nth unit protective units including first to nth adhesive layers formed on the outer surface of each of the first to nth base films, wherein adhesive strength of the first to nth adhesive layers are sequentially reduced such that the first adhesive layer has the highest adhesive strength and the nth adhesive layer has the lowest adhesive strength.

In the above, one surface and the other surface of the first to nth base films are subjected to a corona treatment to have increased surface tension.

In the above, the first to nth base films are formed to have a thickness ranging from 2**µm** to 150**µm**.

In the above, the first to nth primer layers are coated to have a thickness ranging from 0.1**µm** to 50**µm**, and dried at 60°**C** to 120°**C** for 10 seconds to 5 minutes so as to be formed.

In the above, the first to nth protective layers are coated to have a thickness ranging from 0.1**µm** to 50**µm**, and dried at 60°**C** to 120°**C** for 10 seconds to 5 minutes so as to be formed.

In the above, the adhesive strength of the first to nth adhesive layers are sequentially adjusted to be changed such that the first adhesive layer has the smallest content of the hardening agent and the nth adhesive layer has the greatest content of the hardening agent.

In the above, the first to nth adhesive layers are coated to have a thickness ranging from 0.1**µm** to 50**µm**, and dried at 60°**C** to 120°**C** for 10 seconds to 5 minutes so as to be formed.

In the above, the protective sheet further includes a first protective film processed to be released and formed on an upper surface of the nth protective layer and a second protective film formed as a release film or release paper on a lower surface of the first adhesive layer.

In accordance with another aspect of the present invention, there is provided a protective sheet for a touch panel, including: first to fourth base films formed of optical, highly transparent films; first to fourth primer layers formed by applying a synthetic resin having bonding characteristics to one surface of each of the first to fourth base films; first to fourth protective layers made of a synthetic resin including a hardening agent and formed on a surface of each of the first to fourth primer layers to protect the first to fourth base films; and a first to fourth unit protective units including first to fourth adhesive layers formed on the outer surface of each of the first to fourth base films, wherein the first and second adhesive layers are formed by mixing 0.8 parts by weight and 1.2 parts by weight of iso propyl di isocyanate (IPDI) over 100 parts by weight of an adhesive obtained by mixing 2-ethyl hexyl acrylate and N-butyl acrylate in the ratio of 2:8 based on weight, respectively, and the third and fourth adhesive layers are formed by mixing 0.3 parts by weight and 0.5 parts by weight of hexa methyl di isocyanate (HMDI) as a hardening agent over 100 parts by weight of an adhesive obtained by mixing 2-ethyl hexyl acrylate and N-butyl acrylate in the ratio of 8:2 based on weight, respectively.

In accordance with still another aspect of the present invention, there is provided a method for fabricating a protective sheet for a touch panel, the method including: applying a synthetic resin having bonding characteristics to one surface of each of first to nth base films formed of optical, highly transparent films to form first to nth primer layers, respectively; applying a synthetic resin including a hardening agent to a surface of each of the first to nth primer layers and performing UV curing thereon to form first to nth protective layers, respectively; and forming first to n unit protective units, including forming first to nth adhesive layers on the other surface of each of the first to nth base films, respectively, such that adhesive strength of the first to nth base films is sequentially decreased from the first base film to the nth base film; stacking the first to nth unit protective units; and covering the nth protective layer and the first adhesive layer with first and second protective films, respectively.

In the above, the method further includes performing a corona treatment on one surface of the first base film to have increased surface tension, before forming the first primer layer.

In the above, the method further includes performing a corona treatment on the other surface of the first base film to have increased surface tension, before forming the first adhesive layer.

In the above, the hardening agent is added to the first to nth adhesive layers such that the first adhesive layer has the smallest content of the hardening agent, and the content of the hardening agent is gradually reduced, so the nth adhesive layer has the greatest content of the hardening agent.

In accordance with still another aspect of the present invention, there is provided a method for fabricating a protective sheet for a touch panel, the method including: forming first to fourth primer layers, respectively, by applying a synthetic resin having bonding characteristics to one surface of each of first to fourth base films formed of optical, highly transparent films; applying a synthetic resin including a hardening agent on a surface of each of the first to fourth primer layers and performing UV curing thereon to protect the first to fourth base films; forming the first to fourth unit protective units, respectively, including forming first to fourth adhesive layers having adhesive strength sequentially reduced toward the fourth base film from the first base film, in which the first and second adhesive layers are formed by mixing 0.8 parts by weight and 1.2 parts by weight of iso propyl di isocyanate (IPDI) over 100 parts by weight of an adhesive obtained by mixing 2-ethyl hexyl acrylate and N-butyl acrylate in the ratio of 2:8 based on weight, respectively, and the third and fourth adhesive layers are formed by mixing 0.3 parts by weight and 0.5 parts by weight of hexa methyl di isocyanate (HMDI) as a hardening agent over 100 parts by weight of an adhesive obtained by mixing 2-ethyl hexyl acrylate and N-butyl acrylate in the ratio of 8:2 based on weight, respectively; stacking the first to fourth unit protective units; and covering the first protective layer and the first adhesive layer with first and second protective films, respectively.

### Brief Description of the Drawings

The above and other objects and features of the present invention will become apparent from the following description of preferred embodiments, given in conjunction with the accompanying drawings, in which:
Fig. 1 is a cross-sectional view of a protective sheet for a touch panel according to the related art;
Fig. 2 is a cross-sectional view of a protective sheet for a touch panel in accordance with an embodiment of the present invention; and
Figs. 3A to 3C are views showing processes of fabricating a protective sheet for a touch panel in accordance with an embodiment of the present invention.

### Detailed Description of the Embodiments

Hereinafter, embodiments of the present invention will be described in detail with the accompanying drawings.

Fig. 2 is a cross-sectional view of a protective sheet for a touch panel in accordance with an embodiment of the present invention.

In a protective sheet 20 for a touch panel in accordance with an embodiment of the present invention, first to nth unit protective units (29a, 29b, ..., 29n) comprised of first to nth (where n is a natural number) base films (21a, 21b, ..., 21n), first to nth primer layers (23a, 23b, ..., 23n), and first to nth adhesive layers (27a, 27b, ..., 27n), respectively, are laminated (or stacked), and an upper surface of the nth protective layer 25n and a lower surface of the first adhesive layer 27a are covered by first and second protective films 31 and 33, respectively.

The first to nth base films (21a, 21b, ..., 21n) are optical, highly transparent films formed to have a thickness ranging from 2**µm** to 150**µm**. In the above, the first to nth base films (21a, 21b, ..., 21n) are formed as films made of a transparent synthetic resin such as PET, PEN, acryl, polyimide, PMMA, or the like. In the above, one surface and the other surface of the first to nth base films (21a, 21b, ..., 21n) are subjected to a corona treatment to have increased surface tension. Accordingly, contact strength of the first to nth primer layers (23a, 23b, ..., 23n) and the first to nth adhesive layers (27a, 27b, ..., 27n) formed on one surface and the other surface of the first to Nth base films (21a, 21b, ..., 21n) is increased.

The first to nth primer layers (23a, 23b, ..., 23n) are formed on one surface, namely, an upper surface, of the first to nth of base films (21a, 21b, ..., 21n) to enhance bonding characteristics of the first to nth protective layers (25a, 25b, ..., 25n) formed later. In the above, the first to nth primer layer (23a, 23b, ..., 23n) are made of a transparent synthetic resin such as polyurethane, polyester, acryl or the like having excellent bonding characteristics with the first to nth base films (21a, 21b, ..., 21n). The first to nth primer layers (23a, 23b, ..., 23n) are coated to have a thickness ranging from 0.1**µm** to 50**µm** through Gravure coating, micro-Gravure coating or the like, and then, dried at 60°**C** to 120°**C** for about ten seconds to 5 minutes.

The first to nth protective layers (25a, 25b, ..., 25n) prevent the first to nth base films (21a, 21b, ..., 21n) from being contaminated or scratched. In the above, the first to nth protective layers (25a, 25b, ..., 25n) are formed by applying a transparent synthetic resin, such as polyester, a fluorocarbon resin, a UV resin, cellulose, acryl, PMMA, or the like, used as an adhesive agent, with a hardening agent added thereto to the first to nth primer layers (23a, 23b, ..., 23n). The first to nth protective layers (25a, 25b, ..., 25n) are coated to have a thickness ranging from 0.1**µm** to 50**µm** through Gravure coating, reverse coating, micro-Gravure coating, silk printing, offset printing, comma coating or the like, and then, dried at 60°**C** to 120°**C** for about ten seconds to five minutes. Since the first to nth protective layers (25a, 25b, ..., 25n) contain a hardening agent, it can reduce a generation of scratches due to an increase in hardness.

Further, in order to prevent a generation of static electricity, a surfactant for anti-static electricity may be added to the first to nth protective layers (25a, 25b, ..., 25n).

The first to nth adhesive layers (27a, 27b, ..., 27n) are formed on the other surface, i.e., a lower surface, which has been subject to a corona treatment, of the first to nth base films (21a, 21b, ..., 21n), and when the protective sheet 20 in accordance with an embodiment of the present invention is attached to an electronic/information communication device including a touch panel (not shown), the first adhesive layer 27a among them is adhered to the screen. As for adhesive strength of the first to nth adhesive layers (27a, 27b, ..., 27n), the first adhesive layer 27a has the highest adhesive strength, and the adhesive strength is gradually reduced, so the nth adhesive layer 27N has the lowest adhesive strength. Thus, when any one of the second to nth protective layer (25b, ..., 25n) is contaminated or scratched so the second to nth unit protective units (29b, 29c, ..., 29n) are exfoliated, the first to (n-1)th unit protective units (29a, 29c, ..., 29n-1) are not exfoliated. That is, when any one of the second to nth protective layer (25b, ..., 25n) is contaminated or scratched, the (n-1)th unit protective unit 29n-1 is not exfoliated and only the nth unit protective unit 29n is exfoliated. This is because the (n-1)th adhesive layer 27n-1 has higher adhesive strength than that of the nth adhesive layer 27n of the nth unit protective unit 29n.

The first to nth adhesive layers (27a, 27b, ..., 27n) are formed by applying an adhesive with a hardening agent added thereto through reverse coating, Gravure coating, flexo, offset printing, comma coating or the like to have a thickness ranging from 0.1**µm** to 50**µm** and drying the same at 60°**C** to 120°**C** for about 10 seconds to 5 minutes. In the above, as the adhesive, acrylate, polyurethane, silicon, synthetic rubber or the like may be used alone or mixed to be used, and as the hardening agent, isocyanate, epoxy or the like may be used alone or mixed to be used.

In the above, the difference in adhesive strength of the first to nth bonding layers (27a, 27b, ..., 27n) may result from adjusting content of the hardening agent. That is, the first adhesive layer 27a having the highest adhesive strength has the smallest content of the hardening agent, and the content of the hardening agent is gradually increased toward the nth adhesive layer 27n, so the nth adhesive layer 27n having the lowest adhesive strength has the greatest content of the hardening agent.

**Table 1**

| | | | | |
|---|---|---|---|---|
| Hardening agent (part by weight) | 0.2 | 0.6 | 1.0 | 1.4 |
| Adhesive strength (g/inch) | 995±50 | 780±50 | 730±50 | 630±50 |

Table 1 shows an example in which the adhesive strength of the adhesive layers is changed when the applied amount of the hardening agent added to the adhesive was changed. In the above, acrylate was used as the adhesive and isocynate was used as the hardening agent. In the above, the content of the hardening agent was content over the adhesive of 100 parts by weight. Then, the adhesive layer was coated to have a width of 1 inch and a thickness ranging from 18**µm** to 20**µm**, and then, dried at 80°**C** for 3 minutes.

In Table 1, when the added hardening agent was 0.2 parts by weight, the adhesive strength was the highest to be 995±50g/inch, and when the added hardening agent was 1.4 parts by weight, the adhesive strength was the lowest to be 630±50g/inch.

Further, in an embodiment of the present invention, as for the first to nth adhesive layers (27a, 27b, ..., 27n), an adhesive may be mixed to be used. That is, as acrylate, 2-ethyl hexyl acrylate and N-butyl acrylate may be mixed to be used as an adhesive, and as the hardening agent, hexa methyl di isocyanate (HMDI) and iso propyl di isocyanate (IPDI), as isocyanate, may be selectively used.

**Table 2**

| Adhesive | A | | B | |
|---|---|---|---|---|
| Hardening agent (part by weight) | HMDI | | IPDI | |
| | 0.5 | 0.3 | 1.2 | 0.8 |
| Adhesive strength (g/inch) | 50±10 | 100±20 | 200±50 | 300±50 |

Table 2 shows that adhesive strength is changed when the type and amount of the hardening agent were changed to be applied to the adhesives in accordance with an embodiment of the present invention as described above. In the above Table 2, adhesive A was obtained by mixing 2-ethyl hexyl acrylate and N-butyl acrylate in the ratio of 8:2 based on weight, and adhesive B was obtained by mixing 2-ethyl hexyl acrylate and N-butyl acrylate in the ratio of 2:8 based on weight to adjust general adhesive strength. And, desired adhesive strength was adjusted by optionally adding a hardening agent to the adhesives.

In the above, when 0.5 parts by weight of hexa methyl di isocyanate (HMDI) was mixed as a hardening agent to 100 parts by weight of the adhesive A obtained by mixing 2-ethyl hexyl acrylate and N-butyl acrylate in the ratio of 8:2 based on weight, adhesive strength was about 50±10g/inch, and when 0.3 parts by weight thereof was mixed, adhesive strength was about 100±20g/inch. Also, when 1.2 parts by weight of iso propyl di isocyanate (IPDI) was mixed as a hardening agent to 100 parts by weight of the adhesive B obtained by mixing 2-ethyl hexyl acrylate and N-butyl acrylate in the ratio of 2:8 based on weight, adhesive strength was about 200±50g/inch, and when 0.8 parts by weight thereof was mixed, adhesive strength was about 300±50g/inch. In the above, the contents of the hardening agent were contents over 100 parts by weight of the adhesive agents. Also, the adhesive layer was coated to have a width of 1 inch and a thickness ranging from 15**µm** to 20**µm**, and then, dried at 80°C for three minutes.

In the above, it can be seen that, when the two types of adhesives were mixed in the same ratio, the adhesive strength was reduced as the content of the hardening agent was increased. Also, it can be seen that, when the two types of adhesives were mixed in different ratios, the content of the hardening agent was changed, but even in this case, as the content of the hardening agent was increased, the adhesive strength was reduced.

Further, since the first to nth base films 21a, 21b, ..., 21n were subjected to a corona treatment, the contact strength of the first to nth adhesive layers (27a, 27b, ..., 27n) with the first to nth base films (21a, 21b, ..., 21n) is higher than contact strength of the first to nth adhesive layers (27a, 27b, ..., 27n) with the screen of the electronic/information communication device including the touch panel to which the protective sheet is attached and the first to (n-1)th protective layers (25a, 25b, ..., 25-1n), so the first to nth protective units (29a, 29b, ..., 29n) can be easily exfoliated to be removed.

The first protective film 31 is formed of a linear low density polyethylene (LLDPE) based self-adhesive film, or an ethylene vinyl acetate copolymer (EVA) or the like, and covers the nth protective layer 25n to prevent the protective sheet 20 from being scratched or contaminated when packaged and distributed.

The second protective film 33 is formed as a release film or release paper and protects the surface adhered to the screen of the electronic/information communication device including a touch panel without being in contact with the first base film 21a.

In the above, the first and second protective films 31 and 33 are removed when the protective sheet 20 is adhered to the screen of the electronic/information communication device including a touch panel.

In the above, first to nth anti-reflective layer (not shown) may be formed between the first to nth primer layers (23a, 23b, ..., 23n) and the first to nth protective layers (25a, 25b, ..., 25n) in order to prevent light made incident from the outside from being reflected, thus reducing dazzling.

In the protective sheet 20 having the foregoing configuration, the second protective film 33 is exfoliated from the fist adhesive layer 27a, the first adhesive layer 27a is adhered to the screen of the electronic/information communication device including a touch panel, and then, the first protective film 31 is exfoliated to expose the nth protective layer 25n for a use.

In the above, when the exposed nth protective layer 25n is contaminated by a contaminant or scratched during a use, the nth unit protective unit 29n is exfoliated to be removed. The nth unit protective unit 29n may be exfoliated by using a user's hand or a tape.

In the above, since the first to nth base films (21a, 21b, ..., 21n) was subjected to a corona treatment, the first to nth adhesive layers (27a, 27b, ..., 27n), contact strength of the first to nth (27a, 27b, ..., 27n) with the first to nth base films (21a, 21b, ..., 21n) is higher than contact strength of the first to nth (27a, 27b, ..., 27n) with the screen of the electronic/information communication device including a touch panel to which the protective sheet is attached and the first to (n-1)th protective layers (25a, 25b, ..., 21n-1). Thus, the first to nth unit protective units (29a, 29b, ..., 29n) prevent the first to (n-1)th protective layers (25a, 25b, ..., 21n-1) from coming off and are easily exfoliated to be removed.

In the above, when the nth unit protective unit 29n is exfoliated, the (n-1)th protective layer 25n-1 of the (n-1)th unit protective unit 29n-1 in an excellent state without a contaminant or scratch is exposed. Thus, even when the nth protective layer 25n is contaminated by a contaminant or scratched, the protective sheet 20 may be used by exfoliating the nth unit protective unit 29n, rather than being replaced. Accordingly, since the nth unit protective unit 29n to the first unit protective unit 29a of the protective sheet 20 can be sequentially used, namely, since the protective sheet 20 can be used n number of times, the protective sheet 20 has an economical advantage.

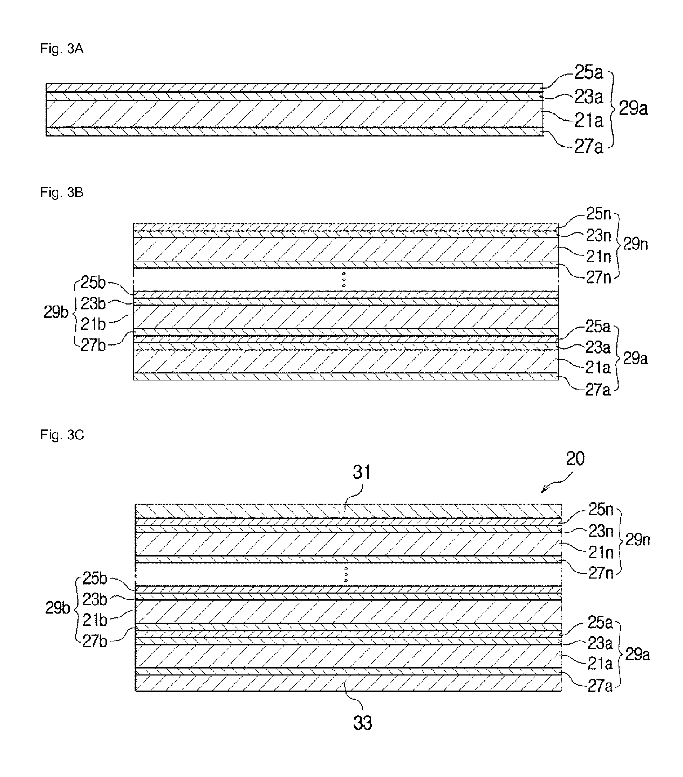

Figs. 3A to 3C are views showing processes of fabricating a protective sheet for a touch panel in accordance with an embodiment of the present invention.

Referring to Fig. 3A, the first primer layer 23a for enhancing bonding characteristics with the first protective layer 25a, which is formed later, is formed on one surface, i.e., on an upper surface, of the first base film 21a. In the above, the first base film 21a is formed of an optical, highly transparent film made of a transparent synthetic resin such as PET, PEN, acryl, polyimide, PMMA or the like, and having a thickness ranging from 2**µm** to 150**µm**.

The first primer layer 23a is formed by applying a transparent synthetic resin such as polyurethane, polyester, acryl or the like, having excellent bonding characteristics with the first base film 21a through Gravure coating, micro-Gravure coating or the like to have a thickness ranging from 0.1**µm** to 50**µm**. And then, the first primer layer 23a is dried at 60°C to 120°C for about ten seconds to five minutes.

In the above, before the first primer layer 23a is formed, one surface of the first base film 21a may be subjected to a corona treatment to have increased surface tension.

Then, the first protective layer 25a is formed on the first primer layer 23a. The first protective layer 25a serves to prevent the first base film 21a from being contaminated or scratched and is formed with a transparent synthetic resin such as polyester, a fluorocarbon resin, a UV resin, cellulose, acryl, PMMA or the like, obtained by adding a hardening agent thereto. In the above, the first protective layer 25a is coated to have a thickness ranging from 0.1**µm** to 50**µm** through Gravure coating, reverse coating, micro-Gravure coating, silk printing, offset printing, comma coating or the like, and then, dried at 60°**C** to 120°**C** for about ten seconds to five minutes, so as to be formed. Since the first to nth protective layers (25a, 25b, ..., 25n) contain a hardening agent to have increased hardness, it can reduce a generation of scratches.

In addition, a surfactant for anti-static electricity may be added to the first to nth protective layers (25a, 25b, ..., 25n) to prevent a generation of static electricity.

In the above, a first anti-reflective layer for preventing light made incident from the outside from being reflected, thus reducing dazzling, may be formed on the first primary layer 23a before the first protective layer 25a is formed.

Further, in a state in which the surface tension is increased by performing a corona treatment on the other surface, i.e., on the lower surface, of the first base film 21a, the first adhesive layer 27a is formed. In the above, the first adhesive layer 27a is formed by adding a hardening agent such as isocyanate or the like to an adhesive such as acrylate, polyurethane, silicon, synthetic rubber or the like, applying the same to have a thickness ranging from 0.1**µm** to 50**µm** through reverse coating, Gravure coating, flexo, offset printing, comma coating or the like, and then, drying the same at 60°**C** to 120°**C** for about 10 seconds to 5 minutes. In the above, since the surface tension of the other surface of the first base film 21a is increased by performing a corona treatment thereon, contact strength of the first base film 21a with the first adhesive layer 27a is increased.

Also, in an embodiment of the present invention, the first adhesive layer 27a may be formed with an adhesive obtained by mixing 2-ethyl hexyl acrylate and N-butyl acrylate in the ratio of 2:8 based on weight. In such a case, when a 0.8 parts by weight of iso propyl di isocyanate (IPDI) is mixed over 100 parts by weight of the adhesive, the adhesive strength of the first adhesive layer 27a is about 300±50g/inch.

The first unit protective unit 29a is formed by sequentially forming the first primer layer 23a, the first protective layer 25a, and the first adhesive layer 27a on the first base film 21a.

Referring to Fig. 3B, the second to nth unit protective units (29b, 29c, ..., 29n) are formed by performing the same process as that of Fig. 3A.

In the above, the first to nth adhesive layers (27a, 27b, ..., 27n) included in the first to nth unit protective units (29a, 29b, ..., 29n) are formed by changing the adhesive strength. Referring to the change in the adhesive strength, the first adhesive layer 27a has the highest adhesive strength, and the adhesive strength is gradually reduced, so the adhesive strength of the nth adhesive layer 27n has is the lowest. In the above, the change in the adhesive strength of the first to nth (27a, 27b, ..., 27n) may be made by adjusting the content of an added hardening agent. The first adhesive layer 27a having the highest adhesive strength may be adjusted to have the smallest content of the hardening agent, and the content of the hardening agent is gradually increased and the nth adhesive layer 27n having the smallest adhesive strength may be adjusted to have the greatest content of the hardening agent.

Further, in an embodiment of the present invention, when the first adhesive layer 27a is formed as shown in Fig. 3A and the first to nth adhesive layers (27a, 27b, ..., 27n) are formed as four layers, the second adhesive layer 27b may be formed with an adhesive obtained by mixing 2-ethyl hexyl acrylate and N-butyl acrylate in the ratio of 2:8 based on weight. In such a case, when a 1.2 parts by weight of iso propyl di isocyanate (IPDI) is mixed over 100 parts by weight of the adhesive, the adhesive strength of the first adhesive layer 27a is about 200±50g/inch.

Next, the other remaining two adhesive layers 27n-1 and 27n may be formed with an adhesive obtained by mixing 2-ethyl hexyl acrylate and N-butyl acrylate in the ratio of 8:2 based on weight and mixing 0.3 parts by weight and 0.5 parts by weight of hexa methyl di isocyanate (HMDI) over 100 parts by weight of the adhesive, respectively. Then, the adhesive strength thereof is about 100±20g/inch and 50±10g/inch, respectively.

Then, the first to nth unit protective units 29a, 29b, ..., 29n are sequentially stacked and pressed to be adhered. In the above, since the surface of the first to nth adhesive layers (27a, 27b, ..., 27n) in contact with the other surface of the first to nth base films (21a, 21b, ..., 21n) which has been subjected to a corona treatment to have increased surface tension has increased contact strength than that of the surface of the first to (n-1)th unit protective units (29a, 29b, ..., 29n-1) in contact with the first to (n-1)th protective layers (25a, 25b, ..., 25n-1). Thus, the second to nth unit protective units (29b, 29c, ..., 29n) can be easily exfoliated without damaging the adjacent first to (n-1)th protective layers (25a, 25b, ..., 25n-1).

Referring to Fig. 3C, the second and first protective films 33 and 31 are adhered to the exposed surface of the first adhesive layer 27a formed on the other surface of the first unit protective unit 29a and the exposed surface of the nth protective layer 25n formed on one surface of the nth unit protective unit 29n, thus completing the protective sheet 20. In the above, the first protective film 31 is formed of a linear low density polyethylene (LLDPE)-based self-adhesive film, or an ethylene vinyl acetate copolymer (EVA) or the like to protect the nth protective layer 25n, and the second protective film 33 is formed as a release film or release paper and protects the surface adhered to the screen of the electronic/information communication device including a touch panel without being in contact with the first base film 21a of the first adhesive layer 27a.

As described above, the protective sheet in accordance with the present invention is formed by stacking the first to nth unit protective units as n number of layers. Thus, when an exposed protective layer in use is contaminated by a contaminant or scratched, the corresponding unit protective unit is exfoliated. Accordingly, an adjacent protective layer in a good state without a contaminant or scratches is exposed, so the protective sheet can be used n number of times without being replaced by a new sheet, thus enhancing economical efficiency.

Thus, by increasing adhesive strength of a plurality of protective units toward a lower layer from the uppermost layer, when a protective unit is exfoliated to be removed, an underlying protective unit can be prevented from coming off. In addition, since a tap or a hole for exfoliating a protective unit is not required, a degradation of an aesthetic appearance can be prevented and the number of processes is reduced.

While the invention has been shown and described with respect to the particular embodiments, it will be understood by those skilled in the art that various changes and modification may be made.

## Claims

1. A protective sheet for a touch panel, the protective sheet comprising:
first to nth (where n is a natural number) base films formed of optical, highly transparent films;
first to nth primer layers formed by applying a synthetic resin having bonding characteristics to one surface of each of the first to nth base films;
first to nth protective layers made of a synthetic resin including a hardening agent and formed on a surface of each of the first to nth primer layers to protect the first to nth base films; and
a first to nth unit protective units including first to nth adhesive layers formed on the outer surface of each of the first to nth base films,
wherein adhesive strength of the first to nth adhesive layers are sequentially reduced such that the first adhesive layer has the highest adhesive strength and the nth adhesive layer has the lowest adhesive strength.

2. The protective sheet of claim 1, wherein one surface and the other surface of the first to nth base films are subjected to a corona treatment to have increased surface tension.

3. A protective sheet according to any one of the preceding claims, wherein the first to nth base films are formed to have a thickness ranging from 2**µm** to 150**µm**.

4. A protective sheet according to any one of the preceding claims, wherein the first to nth primer layers are coated to have a thickness ranging from 0.1**µm** to 50**µm**, and dried at 60°**C** to 120°**C** for 10 seconds to 5 minutes so as to be formed.

5. A protective sheet according to any one of the preceding claims, wherein the first to nth protective layers are coated to have a thickness ranging from 0.1**µm** to 50**µm**, and dried at 60°**C** to 120°**C** for 10 seconds to 5 minutes so as to be formed.

6. A protective sheet according to any one of the preceding claims, wherein the adhesive strength of the first to nth adhesive layers are sequentially adjusted to be changed such that the first adhesive layer has the smallest content of the hardening agent and the nth adhesive layer has the greatest content of the hardening agent.

7. A protective sheet according to any one of the preceding claims, wherein the first to nth adhesive layers are coated to have a thickness ranging from 0.1**µm** to 50**µm**, and dried at 60°**C** to 120°**C** for 10 seconds to 5 minutes so as to be formed.

8. A protective sheet according to any one of the preceding claims, further comprising:
a first protective film processed to be released and formed on an upper surface of the nth protective layer and a second protective film formed as a release film or release paper on a lower surface of the first adhesive layer.

9. A protective sheet according to any one of the preceding claims wherein the first and second adhesive layers are formed by mixing 0.8 parts by weight and 1.2 parts by weight of iso propyl di isocyanate (IPDI) over 100 parts by weight of an adhesive obtained by mixing 2-ethyl hexyl acrylate and N-butyl acrylate in the ratio of 2:8 based on weight, respectively, and the third and fourth adhesive layers are formed by mixing 0.3 parts by weight and 0.5 parts by weight of hexa methyl di isocyanate (HMDI) as a hardening agent over 100 parts by weight of an adhesive obtained by mixing 2-ethyl hexyl acrylate and N-butyl acrylate in the ratio of 8:2 based on weight, respectively.

10. A protective sheet for a touch panel, comprising:
first to fourth base films formed of optical, highly transparent films;
first to fourth primer layers formed by applying a synthetic resin having bonding characteristics to one surface of each of the first to fourth base films;
first to fourth protective layers made of a synthetic resin including a hardening agent and formed on a surface of each of the first to fourth primer layers to protect the first to fourth base films; and
a first to fourth unit protective units including first to fourth adhesive layers formed on the outer surface of each of the first to fourth base films,
wherein the first and second adhesive layers are formed by mixing 0.8 parts by weight and 1.2 parts by weight of iso propyl di isocyanate (IPDI) over 100 parts by weight of an adhesive obtained by mixing 2-ethyl hexyl acrylate and N-butyl acrylate in the ratio of 2:8 based on weight, respectively, and the third and fourth adhesive layers are formed by mixing 0.3 parts by weight and 0.5 parts by weight of hexa methyl di isocyanate (HMDI) as a hardening agent over 100 parts by weight of an adhesive obtained by mixing 2-ethyl hexyl acrylate and N-butyl acrylate in the ratio of 8:2 based on weight, respectively.

11. A method for fabricating a protective sheet for a touch panel, the method comprising:
applying a synthetic resin having bonding characteristics to one surface of each of first to nth base films formed of optical, highly transparent films to form first to nth primer layers, respectively;
applying a synthetic resin including a hardening agent to a surface of each of the first to nth primer layers and performing UV curing thereon to form first to nth protective layers, respectively; and
forming first to n unit protective units, including forming first to nth adhesive layers on the other surface of each of the first to nth base films, respectively, such that adhesive strength of the first to nth base films is sequentially decreased from the first base film to the nth base film;
stacking the first to nth unit protective units; and
covering the nth protective layer and the first adhesive layer with first and second protective films, respectively.

12. The method of claim 11, further comprising:
performing a corona treatment on one surface of the first base film to have increased surface tension, before forming the first primer layer.

13. The method of claim 11 or 12, further comprising:
performing a corona treatment on the other surface of the first base film to have increased surface tension, before forming the first adhesive layer.

14. The method of any one of claims 11 to 13, wherein the hardening agent is added to the first to nth adhesive layers such that the first adhesive layer has the smallest content of the hardening agent, and the content of the hardening agent is gradually reduced, so the nth adhesive layer has the greatest content of the hardening agent.

15. A method for fabricating a protective sheet for a touch panel, the method comprising:
forming first to fourth primer layers, respectively, by applying a synthetic resin having bonding characteristics to one surface of each of first to fourth base films formed of optical, highly transparent films;
applying a synthetic resin including a hardening agent on a surface of each of the first to fourth primer layers and performing UV curing thereon to protect the first to fourth base films;
forming the first to fourth unit protective units, respectively, including forming first to fourth adhesive layers having adhesive strength sequentially reduced toward the fourth base film from the first base film, in which the first and second adhesive layers are formed by mixing 0.8 parts by weight and 1.2 parts by weight of iso propyl di isocyanate (IPDI) over 100 parts by weight of an adhesive obtained by mixing 2-ethyl hexyl acrylate and N-butyl acrylate in the ratio of 2:8 based on weight, respectively, and the third and fourth adhesive layers are formed by mixing 0.3 parts by weight and 0.5 parts by weight of hexa methyl di isocyanate (HMDI) as a hardening agent over 100 parts by weight of an adhesive obtained by mixing 2-ethyl hexyl acrylate and N-butyl acrylate in the ratio of 8:2 based on weight, respectively;
stacking the first to fourth unit protective units; and
covering the first protective layer and the first adhesive layer with first and second protective films, respectively.
